# FASCICULE DE BREVET EUROPEEN

(11) **EP 2 811 065 B1**
(45) Date de publication et mention de la délivrance du brevet: **16.03.2016**
(21) Numéro de dépôt: 14167260.0
(22) Date de dépôt: 06.05.2014
(51) Int. Cl.: D06F 75/12, D06F 75/14

(54) **Appareil de repassage comportant un dispositif de traitement de l'eau**
Bügelgerät, das eine Vorrichtung zur Wasseraufbereitung umfasst
Ironing appliance comprising a water-treatment device

(30) Priorité: 16.05.2013 FR 1354411
(43) Date de publication de la demande: 10.12.2014
(73) Titulaire: SEB S.A., 69130 Ecully (FR)
(72) Inventeur: Gelus, Dominique, 38780 Pont-Évêque (FR)
(74) Mandataire: Bourrières, Patrice

(56) Documents cités:
- WO-A1-2004/085921
- WO-A2-01/44116
- ES-A1- 2 209 665

## Description

La présente invention se rapporte à un appareil de repassage comportant un réservoir d'eau, un générateur de vapeur relié au réservoir par un circuit d'alimentation et un dispositif de traitement de l'eau comportant une anode et une cathode pour faire précipiter le carbonate de calcium présent dans l'eau.

Il est connu, de la demande de brevet WO 01/44116, un appareil de repassage comportant un réservoir d'eau et un générateur de vapeur relié au réservoir par un circuit d'alimentation, l'eau envoyée dans le générateur de vapeur étant traitée au moyen d'un dispositif de traitement comportant une cathode et une anode reliées à une source d'électricité, l'anode et la cathode étant placées directement dans le réservoir et étant séparées l'une de l'autre par une membrane cationique.

Un tel appareil de repassage présente l'avantage de posséder un dispositif de traitement de l'eau du réservoir qui permet de limiter le phénomène d'entartrage dans le générateur et dans le fer à repasser. Toutefois, un tel appareil présente l'inconvénient de faire appel à des membranes échangeuse d'ions qui sont très fragiles et relativement coûteuses. De plus, un tel appareil présente l'inconvénient de posséder un dispositif de traitement de l'eau qui agit directement dans le réservoir principal de l'appareil de sorte que le temps nécessaire pour traiter la totalité de l'eau du réservoir est relativement important. L'utilisateur doit donc attendre un temps relativement important avant de pouvoir utiliser l'appareil s'il veut bénéficier de l'efficacité maximale du dispositif de purification et éviter d'envoyer de l'eau chargée en minéraux dans le générateur de vapeur.

Aussi, un but de la présente invention est de proposer un appareil de repassage comportant un dispositif de traitement de l'eau permettant d'éviter la formation de tartre dans le générateur de vapeur qui soit simple, fiable, et économique à réaliser. Un autre but de la présente invention est de proposer un appareil de repassage muni d'un dispositif de traitement de l'eau dans lequel l'utilisateur n'a pas à attendre avant de pouvoir utiliser l'appareil pour bénéficier de l'efficacité du dispositif de traitement de l'eau.

A cet effet, l'invention a pour objet un appareil de repassage comportant un réservoir d'eau, un générateur de vapeur relié au réservoir d'eau par un circuit d'alimentation et un dispositif de traitement de l'eau comportant une cathode et une anode pour faire précipiter le carbonate de calcium présent dans l'eau, caractérisé en ce que la cathode et l'anode sont disposées dans un récipient, indépendant du réservoir, placé dans le circuit d'alimentation reliant le réservoir au générateur de vapeur, le circuit d'alimentation venant puiser l'eau dans le récipient par une ouverture située plus près de l'anode que de la cathode, et en ce que le débit d'eau au niveau de l'ouverture est inférieur à 70 g/min.

Une telle combinaison de caractéristiques permet, par un dispositif simple et économique à mettre en oeuvre, d'obtenir de l'eau déminéralisée pouvant être utilisée pour produire de la vapeur sans risque de détérioration du générateur de vapeur. En effet, le puisage de l'eau à proximité de l'anode avec un faible débit permet d'obtenir de l'eau dont le degré de dureté est fortement abaissé.

Selon une autre caractéristique de l'invention, le circuit d'alimentation vient puiser l'eau du récipient par une ouverture disposée dans le fond du récipient.

Selon une autre caractéristique de l'invention, l'ouverture du fond du récipient est disposée à la verticale de l'anode.

Une telle caractéristique permet de venir puiser l'eau dans le fond du récipient au plus près de l'anode.

Selon encore une autre caractéristique de l'invention, le circuit d'alimentation comporte une réserve d'eau qui est alimentée par l'ouverture du récipient, le circuit d'alimentation comportant une pompe venant puiser de l'eau dans la réserve pour l'envoyer vers le générateur de vapeur.

Une telle réserve présente l'avantage de constituer un volume tampon d'eau déminéralisée dans lequel la pompe peut venir puiser. En particulier, ce volume tampon d'eau déminéralisée permet d'alimenter ponctuellement le générateur de vapeur avec un débit supérieur à la capacité de production du dispositif de traitement de l'eau du récipient. En effet, le dispositif de traitement de l'eau fonctionnant en continu lorsque l'appareil est alimenté électriquement, il est possible, grâce à la réserve, d'alimenter la pompe avec un débit supérieur au débit d'eau déminéralisée fournit par le dispositif de traitement, la pompe n'étant utilisée que ponctuellement, lors de phases de quelques secondes, pour alimenter le générateur de vapeur.

Selon une autre caractéristique de l'invention, le récipient alimente par gravité la réserve avec un débit d'eau préférentiellement de l'ordre de 50 g/min.

Une telle caractéristique permet de limiter le débit d'eau du récipient vers la réserve pour garantir une efficacité suffisante du dispositif de traitement de l'eau.

Selon une autre caractéristique de l'invention, l'anode occupe une position centrale dans le récipient, la cathode étant fixée contre une paroi périphérique du récipient.

Selon une autre caractéristique de l'invention, une tension continue de 30V est appliquée aux bornes de l'anode et de la cathode.

Selon une autre caractéristique de l'invention, la cathode est réalisée en graphite ou en inox chargé de titane.

Selon une autre caractéristique de l'invention, la cathode est réalisée en graphite et comporte une connectique qui évolue progressivement et devient de plus en plus large lorsqu'elle s'approche de la cathode.

Selon une autre caractéristique de l'invention, l'anode est réalisée en inox chargée de titane ou en inox revêtu de ruthénium ou de platine.

Selon une autre caractéristique de l'invention, l'alimentation du récipient est régulée pour avoir un niveau d'eau H constant dans le récipient lorsque le réservoir d'eau n'est pas vide.

Une telle caractéristique permet d'obtenir un débit contrôlé de l'eau s'écoulant par gravité au travers de l'ouverture du récipient.

Selon une autre caractéristique de l'invention, le réservoir comporte une enceinte fermée comprenant un orifice de sortie débouchant dans le récipient, l'orifice de sortie constituant le seul évent du réservoir.

Un tel réservoir présente l'avantage de constituer une solution simple et économique à mettre en oeuvre permettant d'obtenir un niveau d'eau constant dans le récipient, l'eau du réservoir se déversant par gravité dans le récipient jusqu'à ce que le niveau d'eau dans le récipient atteigne le niveau de l'orifice de sortie.

Selon une autre caractéristique de l'invention, le récipient comporte un filtre laissant passer l'eau et retenant les particules présentes dans l'eau en fonction de leur taille, le filtre formant une barrière filtrante entre une chambre primaire recevant la cathode, alimentée avec l'eau du réservoir, et une chambre secondaire recevant l'anode, la chambre secondaire comportant un orifice de sortie alimentant le générateur de vapeur.

Une telle caractéristique permet d'éviter que des cristaux de tartre ne soient envoyés vers la réserve, ces derniers étant confinés par le filtre dans la chambre primaire.

Selon encore une autre caractéristique de l'invention, le filtre présente une porosité adaptée pour ne laisser passer que les particules présentant une taille inférieure à 50 µm et préférentiellement inférieure ou égale à 30 µm.

Une telle caractéristique permet d'obtenir une bonne filtration des cristaux de tartre avec une vitesse de colmatage réduite du filtre.

Selon encore une autre caractéristique de l'invention, le filtre est monté de manière à être amovible du récipient sans faire appel à un outil.

Une telle caractéristique permet une extraction aisée du filtre pour son nettoyage.

Selon encore une autre caractéristique de l'invention, le filtre s'étend verticalement autour de l'anode et comporte une extrémité inférieure qui supporte un réceptacle de récupération des cristaux de tartre qui s'étend latéralement à l'extérieur du filtre.

Une telle caractéristique permet d'extraire les cristaux de tartre en même temps que le filtre lorsque ce dernier est extrait du récipient pour son nettoyage.

Selon encore une autre caractéristique de l'invention, l'orifice de sortie est dimensionné pour permettre un débit d'eau de l'ordre de 50 g/min.

Une telle caractéristique permet d'assurer la limitation du débit à la sortie du récipient au moyen de l'orifice de sortie du filtre.

Selon encore une autre caractéristique de l'invention, l'appareil comporte une base génératrice de vapeur reliée par un cordon à un fer à repasser, la base intégrant le générateur de vapeur et le réservoir d'eau.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 représente une vue schématique d'un appareil de repassage selon un mode particulier de réalisation de l'invention, lorsque le filtre est en place dans le récipient de traitement de l'eau.
- la figure 2 est une vue en coupe longitudinale d'une base génératrice de vapeur d'un appareil de repassage selon un mode particulier de réalisation de l'invention.
- la figure 3 est une vue en perspective du filtre équipant l'appareil de repassage de la figure 2 ;
- la figure 4 est une vue en coupe longitudinale du filtre de la figure 3 ;
- la figure 5 est une vue schématique de l'appareil de la figure 1 lorsque le filtre est extrait du récipient de traitement de l'eau.

Seuls les éléments nécessaires à la compréhension de l'invention ont été représentés. Pour faciliter la lecture des dessins, les mêmes éléments portent les mêmes références d'une figure à l'autre.

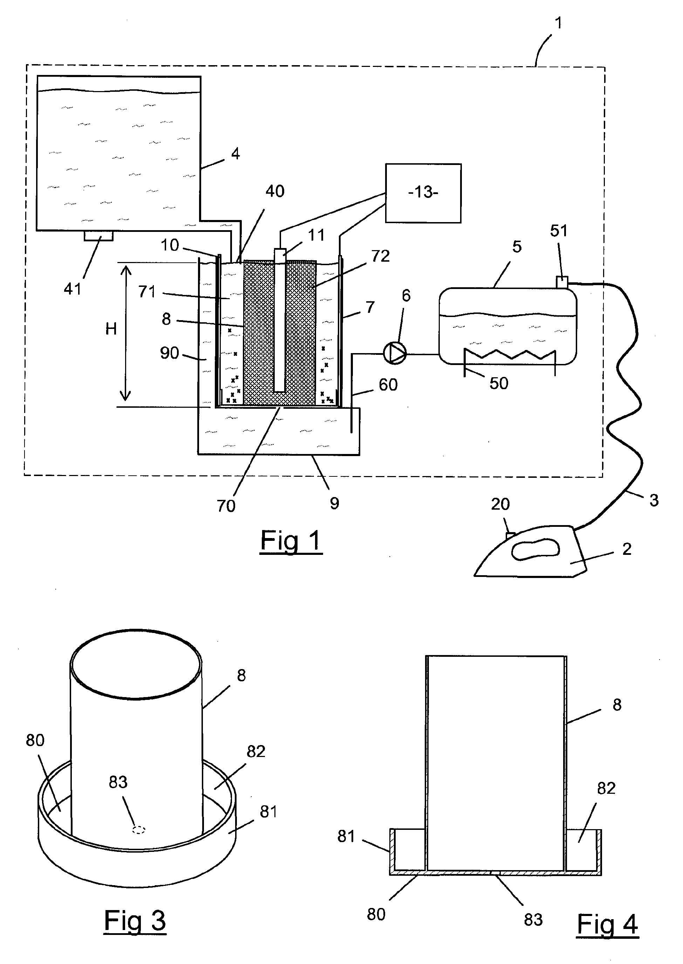

La figure 1 représente schématiquement un appareil de repassage comportant une base 1 pour la production de vapeur et un fer à repasser 2 comprenant une semelle munie de trous de sortie de vapeur, le fer à repasser 2 étant relié à la base 1 par un cordon 3.

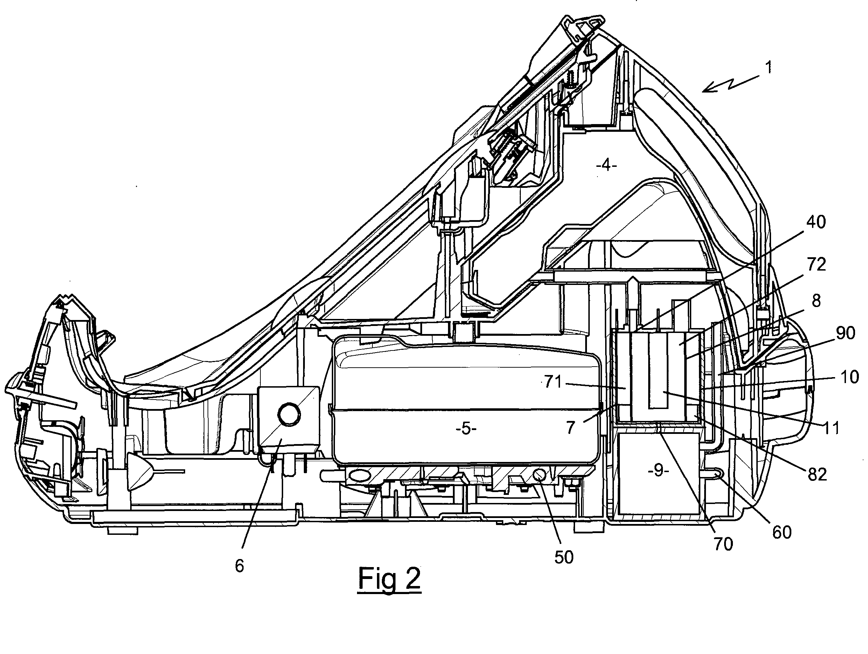

Conforment aux figures 1 et 2, la base 1 comporte un réservoir 4 d'eau amovible, d'une capacité de l'ordre de 1,5 litre, et un générateur de vapeur constitué par une cuve 5 comprenant une résistance chauffante 50 d'une puissance de l'ordre de 1400 W permettant de produire de la vapeur sous une pression de l'ordre de 4 à 6 bars, la cuve 5 comportant une électrovanne 51, visible uniquement sur la figure 1, reliée au cordon du fer à repasser et commandée par un bouton 20 disposé sur le fer à repasser 2.

La cuve 5 est alimentée avec de l'eau en provenance du réservoir 4 au moyen d'un circuit d'alimentation comprenant une pompe 6 de circulation disposée juste en amont de la cuve 5, cette pompe 6 étant commandée par une carte de pilotage, non représentée sur les figures, et permettant d'injecter l'eau dans la cuve 5 sous une pression pouvant atteindre 15 bars.

Le circuit d'alimentation de la cuve 5 comporte, en amont de la pompe 6, un dispositif pour le traitement de l'eau comportant un récipient 7 recevant des moyens pour faire précipiter le carbonate de calcium et un filtre 8 amovible qui prend place dans le récipient 7 par une extrémité supérieure ouverte du récipient 7.

Le filtre 8, ainsi disposé dans le récipient, forme une barrière filtrante entre une chambre primaire 71 externe, de forme annulaire, dans laquelle débouche un orifice de sortie 40 du réservoir 4 et une chambre secondaire 72 disposée à l'intérieur du filtre 8, la chambre secondaire 72 s'étendant au dessus d'une zone centrale du fond du récipient 7 comportant une ouverture 70 débouchant dans une réserve 9 ménagée sous le fond du récipient 7.

A titre d'exemple, le récipient 7 présente la forme d'un cylindre de section circulaire présentant un diamètre de l'ordre de 55 mm et une hauteur de l'ordre de 100 mm pour un volume de l'ordre de 200 cm³, le filtre 8 étant réalisé en acier inox, préférentiellement chargé de titane, et présentant un diamètre de l'ordre de 35 mm, une hauteur de l'ordre de 100 mm, et des porosités de l'ordre de 30 µm.

L'alimentation du récipient 7 est avantageusement régulée de manière à avoir un niveau d'eau H dans le récipient 7 constant lorsque de l'eau est présente dans le réservoir 4. A cet effet, le réservoir 4 présente la forme d'une enceinte fermée dans laquelle l'orifice de sortie 40 constitue le seul évent du réservoir 4. Le réservoir 4 comporte également un orifice de remplissage qui est fermé par un bouchon étanche 41, visible sur la figure 1, et qui permet un remplissage aisé du réservoir 4 en position retournée.

Conformément aux figures 3 et 4, le filtre 8 comporte une extrémité inférieure qui supporte une coupelle 80 présentant la forme d'un disque d'un diamètre légèrement inférieur au diamètre du récipient 7, la coupelle 8 comportant une partie s'étendant radialement à l'extérieur du filtre, se terminant par une bordure périphérique 81 relevée, qui définit un réceptacle de récupération 82 des particules de tartre.

De manière préférentielle, la coupelle 80 comporte un orifice central 83 qui est calibré pour laisser passer l'eau par gravité avec un débit de l'ordre de 50 g/min lorsque le niveau d'eau dans le récipient 7 est égal au niveau d'eau H, cet orifice central 83 venant en regard de l'ouverture 70 prévue dans le fond du récipient 7 et présentant un diamètre de l'ordre 2 mm.

Comme on peut le voir sur les figures 1 et 2, la réserve 9 comporte un tuyau d'évent 90 qui s'étend le long du récipient 7 jusqu'à une hauteur supérieure au niveau d'eau H dans le récipient 7, la pompe 6 comportant un tuyau d'admission 60 qui vient puiser l'eau de la réserve 9. De manière préférentielle, l'extrémité inférieure du tuyau d'admission 60 est distante du fond de la réserve 9 de quelques centimètres afin d'éviter de puiser les éventuelles particules venant se déposer par décantation dans le fond de la réserve 9. A titre d'exemple, l'extrémité inférieure du tuyau d'admission 60 sera distante d'au moins 1 cm du fond de la réserve 9, cette dernière présentant un volume de l'ordre de 150 cm³.

Les moyens pour faire précipiter le carbonate de calcium sont constitués par une cathode 10 placée dans la chambre primaire 71 et par une anode 11 placée dans la chambre secondaire 72, l'anode 11 et la cathode 10 étant alimentées en courant par une unité de contrôle 13 de la tension appliquant une tension continue de 30V avec une intensité maximale de 1 A.

De manière préférentielle, la cathode 10 est réalisée en graphite ou en inox chargé de titane et présente une forme cylindrique épousant la forme de la paroi interne du récipient 7, en s'étendant sur une hauteur de l'ordre de 100 mm.

La cathode 10 est reliée à l'unité de contrôle 13 de la tension par une connectique qui s'étend en dehors du récipient 7 et qui présente préférentiellement une section qui évolue progressivement et devient de plus en plus large lorsqu'elle arrive au contact de la cathode 10. Une telle caractéristique présente l'avantage d'éviter une concentration de courant au niveau de la connexion avec la cathode 10 qui contribue à la destruction progressive de la cathode 10 lorsque cette dernière est réalisée en graphite.

L'anode 11 est préférentiellement réalisée en inox chargé de titane, ou en inox revêtu de ruthénium ou de platine, pour éviter sa corrosion, et présente la forme d'une tige de diamètre 10 mm et d'une hauteur de 90 mm qui s'étend verticalement au centre du récipient 7, l'extrémité inférieure de l'anode 11 étant placée à une distance de l'ordre de 10 mm du fond du récipient 7.

Le fonctionnement et les avantages de l'appareil ainsi réalisé vont maintenant être décrits.

Lors de l'utilisation de l'appareil, l'utilisateur rempli le réservoir 4 amovible puis le place sur la base 1 de manière à ce que l'eau contenue dans le réservoir 4 se déverse par gravité dans le récipient 7 jusqu'à atteindre le niveau H de l'orifice de sortie 40 du réservoir 4 pour lequel le niveau d'eau vient empêcher l'air de pénétrer dans le réservoir 4, ce qui stoppe automatiquement l'écoulement de l'eau du réservoir 4 vers le récipient 7.

L'utilisateur met ensuite l'appareil en fonctionnement, ce qui provoque l'alimentation de la résistance chauffante 50 de la cuve 5, sous le contrôle d'une électronique de régulation associée à un capteur de température non représentés sur les figures, et l'application constante d'une tension continue de 30V aux bornes de l'anode 11 et de la cathode 10.

La tension appliquée entre l'anode 11 et la cathode 10 provoque, de manière connue en soi, le déplacement des ions positifs Ca²⁺ et Ma²⁺ vers la cathode 10, en traversant si nécessaire les pores du filtre 8, puis la précipitation dans le temps de carbonate de calcium sous la forme de cristaux de calcites ou de vatérites d'une taille de 5 à 50 µm dans la chambre primaire 71, où se forme un environnement basique du fait de la production d'ions OH⁻.

Afin d'éviter l'entartrage trop rapide de la cathode 10, l'appareil comprend avantageusement une phase de fonctionnement de quelques secondes durant laquelle la polarité à la cathode 10 et à l'anode 11 est inversée, cette inversion de la polarité pouvant intervenir toutes les dix minutes.

L'eau déminéralisée produite dans la chambre secondaire 72 au voisinage de l'anode 11 s'écoule par gravité dans l'orifice central 83 puis par l'ouverture 70 du fond du récipient 7 pour tomber dans la réserve 9. Les cristaux de tartre présentant une taille supérieure à 30 µm, qui se forment progressivement dans la chambre primaire 71, sont bloqués dans cette dernière par le filtre 8, le faible débit d'eau au travers de l'orifice central 83 présentant l'avantage de limiter les risques de colmatage du filtre 8 en ne produisant qu'une très faible aspiration au voisinage du filtre 8.

De manière préférentielle, le colmatage du filtre 8 est également retardé en polarisant de manière cyclique le filtre 8, qui est réalisé en matériau électriquement conducteur, cette polarisation étant effectuée en mettant temporairement le filtre 8 au potentiel électrique de l'anode 11, afin que le champ électrique s'établissant entre le filtre 8 et la cathode 10 repousse les particules de tartre en direction de la cathode 10. A titre d'exemple, le filtre 8 sera relié pendant 10 secondes au potentiel de l'anode 11 toutes les 40 secondes.

Les cristaux de tartre de taille inférieure à 30 µm restent également majoritairement prisonniers de la chambre primaire 71 grâce à la présence du courant électrique qui les attire vers la cathode 10 et à la très faible aspiration provoquée par l'écoulement de l'eau déminéralisé à faible débit au travers de l'orifice central 83, les éventuels cristaux traversant le filtre 8 allant se déposer par gravité dans le fond de la réserve 9.

Lorsqu'il est nécessaire d'alimenter en eau la cuve 5 pour produire de la vapeur, la carte de pilotage commande le fonctionnement de la pompe 8 qui vient puiser l'eau déminéralisée dans la réserve 9 par le tuyau d'admission 60, à distance du fond pour éviter d'aspirer les cristaux de tartre pouvant se déposer dans le fond de la réserve 9.

Cet acheminement de l'eau vers la cuve 5 s'effectue par des phases de fonctionnement séquencées de la pompe 6, même lorsque l'utilisateur actionne en permanence le bouton 20 de vapeur du fer à repasser 2, la pompe 6 fonctionnant par exemple sur une durée de 3 secondes toutes les 12 secondes. Un tel fonctionnement séquentiel de la pompe 6 permet d'éviter un fonctionnement à vide de la pompe 6 en établissant des phases d'arrêt de la pompe 6 durant lesquelles la baisse du niveau d'eau dans la réserve 9 peut être compensée par l'arrivée d'eau déminéralisée s'effectuant par gravité au travers de l'ouverture 70 du fond du récipient 7.

L'écoulement d'eau déminéralisée du récipient 7 vers la réserve 9 est automatiquement compensé par le remplissage automatique de la chambre primaire 71 du récipient 7 avec de l'eau en provenance du réservoir 4 lorsque le niveau dans le récipient 7 est inférieur au niveau d'eau H, l'appareil étant avantageusement équipé d'un capteur de détection de réservoir vide, non représenté sur les figures, qui interrompt le fonctionnement de la pompe 6 lorsque le réservoir 4 est vide, un tel arrêt de la pompe 6 permettant de garantir la présence d'eau dans le récipient 7 et donc la production permanente d'eau déminéralisée lorsque l'appareil est sous tension.

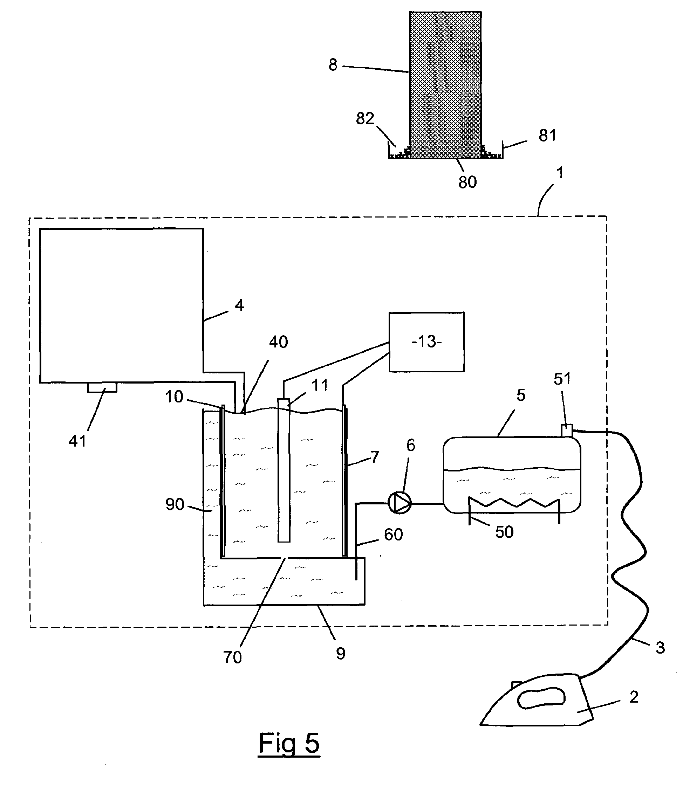

Lorsque le réservoir 4 est vide, l'utilisateur extrait ce dernier de la base 1 pour le remplir et peut alors profiter de cette opération pour sortir le filtre 8, ainsi que cela est illustré sur la figure 5, en le translatant verticalement au travers de l'ouverture supérieure du récipient 7.

Lors de ce déplacement vertical du filtre 8, tous les cristaux de carbonate de calcium présents dans la chambre primaire 71 se trouvent récupérés dans le réceptacle de récupération 82 de la coupelle 80 située à la base du filtre 8. L'utilisateur peut alors rincer le filtre 8 et le réceptacle de récupération 82 en les passant sous un robinet avant de remettre en place le filtre 8 dans le récipient 7. Bien entendu, l'appareil pourra être équipé d'un dispositif pour détecter la présence du filtre 8 et empêcher le fonctionnement de l'appareil en l'absence du filtre 8 dans le récipient 7.

L'appareil ainsi réalisé présente l'avantage de posséder un dispositif de traitement de l'eau simple et économique à réaliser qui permet de fournir une eau déminéralisée pouvant être utilisée dans le générateur de vapeur pour une plus grande longévité de l'appareil.

Cet appareil présente également l'avantage de posséder une réserve d'eau déminéralisée, indépendante du réservoir, dans laquelle la pompe peut venir puiser l'eau pour alimenter le générateur de vapeur. En particulier, cette réserve d'eau déminéralisée a l'avantage d'être produite en continu lorsque l'appareil est alimenté électriquement et d'être stockée dans l'appareil dans un endroit distinct du réservoir principal de l'appareil de sorte qu'elle est immédiatement disponible au démarrage de l'appareil, dès la deuxième utilisation de l'appareil. Ainsi, si l'utilisateur vidange le réservoir principal de l'appareil après chaque utilisation ou si le réservoir se retrouve vide suite à une utilisation prolongée de l'appareil, l'utilisateur peut remplir de nouveau le réservoir principal et utiliser l'appareil sans attendre que le dispositif de traitement de l'eau ait produit son effet sur l'ensemble du volume d'eau contenu dans le réservoir.

Enfin, un tel appareil présente l'avantage d'une maintenance aisée, le filtre pouvant facilement être extrait du récipient pour son nettoyage et pour l'évacuation des cristaux de tartre.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la limitation du débit entre la chambre secondaire et la réserve pourra être réalisée en limitant la section de passage de l'ouverture dans le fond du récipient plutôt qu'au niveau de l'orifice central, ce dernier pouvant alors présenter une plus grande section de passage.

Ainsi dans une variante de réalisation non représentée, le fond de la réserve pourra comporter un orifice de vidange fermé par un bouchon amovible, accessible par exemple par le dessous de la base, un tel orifice de vidange permettant l'évacuation des éventuels cristaux de tartre se déposant dans la réserve.

Ainsi dans une autre variante de réalisation non représentée, le récipient pourra être alimenté avec de l'eau en provenance du réservoir au moyen d'une pompe.

## Revendications

1. Appareil de repassage comportant un réservoir (4) d'eau, un générateur de vapeur (5) relié au réservoir d'eau par un circuit d'alimentation et un dispositif de traitement de l'eau comportant une cathode (10) et une anode (11) pour faire précipiter le carbonate de calcium, **caractérisé en ce que** la cathode (10) et l'anode (11) sont disposées dans un récipient (7), indépendant du réservoir (4), placé dans le circuit d'alimentation reliant le réservoir (4) au générateur de vapeur (5), ledit circuit d'alimentation venant puiser l'eau dans le récipient (7) par une ouverture (70) située plus près de l'anode (11) que de la cathode (10), et **en ce que** le débit d'eau au niveau de l'ouverture (70) est inférieure à 70 g/min.

2. Appareil de repassage selon la revendication 1, **caractérisé en ce que** l'ouverture (70) est disposée dans le fond du récipient (7).

3. Appareil de repassage selon la revendication 2, **caractérisé en ce que** l'ouverture (70) est disposée à la verticale de l'anode (11).

4. Appareil de repassage selon l'une quelconque des revendications 1 à 3, **caractérisé en ce que** le circuit d'alimentation comporte une réserve (9) d'eau qui est alimentée par l'ouverture (70) du récipient (7) et **en ce que** le circuit d'alimentation comporte une pompe (6) venant puiser de l'eau dans la réserve (9) pour l'envoyer vers le générateur de vapeur (5).

5. Appareil de repassage selon la revendication 4, **caractérisé en ce que** le récipient (7) alimente par gravité la réserve (9) avec un débit d'eau préférentiellement de l'ordre de 50 g/min.

6. Appareil de repassage selon l'une quelconque des revendications 1 à 5, **caractérisé en ce que** l'anode (11) occupe une position centrale dans le récipient (7), la cathode (10) étant fixée contre une paroi périphérique du récipient (7).

7. Appareil de repassage selon l'une quelconque des revendications 1 à 6, **caractérisé en ce que** l'alimentation du récipient (7) est régulée pour avoir un niveau d'eau H constant dans le récipient (7) lorsque le réservoir (4) d'eau n'est pas vide.

8. Appareil de repassage selon la revendication 7, **caractérisé en ce que** le réservoir (4) comporte une enceinte fermée comprenant un orifice de sortie (40) débouchant dans le récipient (7), ledit orifice de sortie (40) constituant le seul évent du réservoir (4).

9. Appareil de repassage selon l'une quelconque des revendications 1 à 8, **caractérisé en ce que** le récipient (7) comporte un filtre (8) laissant passer l'eau et retenant les particules présentes dans l'eau en fonction de leur taille, le filtre (8) formant une barrière filtrante entre une chambre primaire (71) recevant la cathode (10), alimentée avec l'eau du réservoir (4), et une chambre secondaire (72) recevant l'anode (11), la chambre secondaire (72) comportant un orifice de sortie (83) alimentant le générateur de vapeur (5).

10. Appareil de repassage selon la revendication 9, **caractérisé en ce que** le filtre (8) présente une porosité adaptée pour ne laisser passer que les particules présentant une taille inférieure à 50 µm et préférentiellement inférieure ou égale à 30 µm.

11. Appareil de repassage selon l'une quelconque des revendications 9 à 10, **caractérisé en ce que** le filtre (8) est monté de manière à être amovible du récipient (4) sans faire appel à un outil.

12. Appareil de repassage selon la revendication 11, **caractérisé en ce que** le filtre (8) s'étend verticalement autour de l'anode (11) et comporte une extrémité inférieure qui supporte un réceptacle de récupération (82) des cristaux de tartre qui s'étend latéralement à l'extérieur du filtre (8).

13. Appareil de repassage selon l'une quelconque des revendications 9 à 12, **caractérisé en ce que** l'orifice de sortie (83) est dimensionné pour permettre un débit d'eau de l'ordre de 50 g/min.

14. Appareil de repassage selon l'une quelconque des revendications 1 à 13, **caractérisé en ce qu'**il comporte une base (1) génératrice de vapeur reliée par un cordon (3) à un fer à repasser (2), la base (1) intégrant le générateur de vapeur (5) et le réservoir (4) d'eau.

## Patentansprüche

1. Bügelgerät mit einem Wasserbehälter (4), einem Dampferzeuger (5), der über einen Versorgungskreis mit dem Wasserbehälter verbunden ist, und einer Vorrichtung zur Wasseraufbereitung, die eine Kathode (10) und eine Anode (11) zur Ausfällung von Calciumcarbonat aufweist, **dadurch gekennzeichnet, dass** die Kathode (10) und die Anode (11) in einem vom Behälter (4) unabhängigen Gefäß (7) sitzen, das im Versorgungskreis angeordnet ist, der den Behälter (4) mit dem Dampferzeuger (5) verbindet, wobei dieser Versorgungskreis das Wasser aus dem Gefäß (7) über eine Öffnung (70) entnimmt, die näher an der Anode (11) als an der Kathode (10) liegt, und **dadurch gekennzeichnet, dass** der Wasserdurchsatz an der Öffnung (70) kleiner als 70 g/min ist.

2. Bügelgerät nach Anspruch 1, **dadurch gekennzeichnet, dass** die Öffnung (70) in den Boden des Behälters (7) eingelassen ist.

3. Bügelgerät nach Anspruch 2, **dadurch gekennzeichnet, dass** die Öffnung (70) vertikal zur Anode (11) angeordnet ist.

4. Bügelgerät nach einem der Ansprüche 1 bis 3, **dadurch gekennzeichnet, dass** der Versorgungskreis einen Wasservorrat (9) umfasst, der über die Öffnung (70) des Gefäßes (7) gespeist wird, und dass der Versorgungskreis eine Pumpe (6) aufweist, die Wasser aus dem Vorrat (9) pumpt und an den Dampferzeuger (5) leitet.

5. Bügelgerät nach Anspruch 4, **dadurch gekennzeichnet, dass** das Gefäß (7) den Vorrat (9) mittels Schwerkraft und einem Wasserdurchsatz von bevorzugt 50 g/min versorgt.

6. Bügelgerät nach einem der Ansprüche 1 bis 5, **dadurch gekennzeichnet, dass** die Anode (11) an zentraler Stelle im Gefäß (7) sitzt, wobei die Kathode (10) an einer Umfangswand des Gefäßes (7) befestigt ist.

7. Bügelgerät nach einem der Ansprüche 1 bis 6, **dadurch gekennzeichnet, dass** die Versorgung des Gefäßes (7) so reguliert ist, dass im Gefäß (7) ein konstantes Wasserniveau H gegeben ist, wenn der Wasserbehälter (4) nicht leer ist.

8. Bügelgerät nach Anspruch 7, **dadurch gekennzeichnet, dass** der Behälter (4) einen geschlossenen Raum umfasst, der über einen Auslass (40) verfügt, der in das Gefäß (7) führt, wobei dieser Auslass (40) die einzige Öffnung des Behälters (4) darstellt.

9. Bügelgerät nach einem der Ansprüche 1 bis 8, **dadurch gekennzeichnet, dass** der Behälter (7) einen Filter (8) umfasst, der das Wasser durchlässt und die im Wasser enthaltenen Partikel in Abhängigkeit ihrer Größe zurückhält, wobei der Filter (8) eine filtrierende Barriere bildet zwischen einer Hauptkammer (71), in der sich die Kathode (10) befindet und die mit Wasser des Behälters (4) versorgt wird, und einer Nebenkammer (72), in der sich die Anode (11) befindet und die über einen Auslass (83) verfügt, über den der Dampferzeuger (5) versorgt wird.

10. Bügelgerät nach Anspruch 9, **dadurch gekennzeichnet, dass** der Filter (8) eine angepasste Porengröße aufweist, damit diesen nur Partikel einer Größe von weniger als 50 µm und bevorzugt einer Größe von maximal 30 µm passieren.

11. Bügelgerät nach einem der Ansprüche 9 bis 10, **dadurch gekennzeichnet, dass** der Filter (8) so eingebaut ist, dass er vom Behälter (4) werkzeuglos abnehmbar ist.

12. Bügelgerät nach Anspruch 11, **dadurch gekennzeichnet, dass** sich der Filter (8) vertikal um die Anode (11) erstreckt und ein unteres Ende aufweist, das einen Auffangbehälter (82) für Weinstein trägt, der sich seitlich aus dem Filter (8) heraus erstreckt.

13. Bügelgerät nach einem der Ansprüche 9 bis 12, **dadurch gekennzeichnet, dass** der Auslass (83) größenmäßig so ausgelegt ist, dass ein Wasserdurchsatz von ca. 50 g/min möglich ist.

14. Bügelgerät nach einem der Ansprüche 1 bis 13, **dadurch gekennzeichnet, dass** es einen dampferzeugenden Sockel (1) aufweist, der über ein Kabel (3) mit einem Bügeleisen (2) verbunden ist, wobei in den Sockel (1) der Dampferzeuger (5) und der Wasserbehälter (4) integriert sind.

## Claims

1. Ironing appliance comprising a water tank (4), a steam generator (5) connected to the water tank by a supply circuit and a water treatment device comprising a cathode (10) and an anode (11) to precipitate the calcium carbonate, **characterised in that** the cathode (10) and the anode (11) are arranged in a container (7), independent from the tank (4), placed in the supply circuit connecting the tank (4) to the steam generator (5), said supply circuit drawing water from the tank (7) through an opening (70) located closer to the anode (11) than the cathode (10), and **in that** the water flow rate at the opening (70) is less than 70 g/min.

2. Ironing appliance according to claim 1, **characterised in that** the opening (70) is arranged in the bottom of the container (7).

3. Ironing appliance according to claim 2, **characterised in that** the opening (70) is arranged vertically above the anode (11).

4. Ironing appliance according to any one of claims 1 to 3, **characterised in that** the supply circuit comprises a water reserve (9) which is supplied through the opening (70) of the container (7) and **in that** the supply circuit includes a pump (6) drawing water from the reserve (9) to send it to the steam generator (5).

5. Ironing appliance according to claim 4, **characterised in that** the container (7) supplies the reserve (9) by gravity with a water flow rate of preferably about 50 g/min.

6. Ironing appliance according to any one of claims 1 to 5, **characterised in that** the anode (11) occupies a central position in the container (7), the cathode (10) being attached against a peripheral wall of the container (7).

7. Ironing appliance according to any one of claims 1 to 6, **characterised in that** the supply of the container (7) is regulated to obtain a constant water level H in the container (7) when the water tank (4) is not empty.

8. Ironing appliance according to claim 7, **characterised in that** the tank (4) includes a closed chamber comprising an outlet hole (40) opening into the container (7), said outlet hole (40) forming the only vent of the tank (4).

9. Ironing appliance according to any one of claims 1 to 8, **characterised in that** the container (7) includes a filter (8) allowing water to pass and trapping the particles present in the water according to their size, the filter (8) forming a filtering barrier between a primary chamber (71) receiving the cathode (10), supplied with water from the tank (4), and a secondary chamber (72) receiving the anode (11), the secondary chamber (72) having an outlet hole (83) supplying the steam generator (5).

10. Ironing appliance according to claim 9, **characterised in that** the porosity of the filter (8) is adapted to only allow particles of size less than 50 µm, and preferably less than or equal to 30 µm, to pass.

11. Ironing appliance according to claim 9 to 10, **characterised in that** the filter (8) is mounted so as to be removable from the container (4) without using a tool.

12. Ironing appliance according to claim 11, **characterised in that** the filter (8) extends vertically around the anode (11) and has a lower end supporting a container (82) to recover scale crystals which extends laterally outside the filter (8).

13. Ironing appliance according to any one of claims 9 to 12, **characterised in that** the outlet hole (83) is dimensioned to allow a water flow rate of about 50 g/min.

14. Ironing appliance according to any one of claims 1 to 13, **characterised in that** it comprises a steam generator base (1) connected by a cord (3) to an iron (2), the base (1) including the steam generator (5) and the water tank (4).
